# EUROPEAN PATENT APPLICATION

(11) **EP 1 054 570 A1**
(43) Date of publication of application: **22.11.2000**
(21) Application number: 99109777.5
(22) Date of filing: 18.05.1999
(51) Int. Cl.: H04Q 7/38, H04Q 7/32

(54) **Mobile terminal outputting an indicating signal in a protection mode**

(71) Applicant: Sony International (Europe) GmbH, 50829 Köln (DE)
(72) Inventor: Weber, Matthias, 81927 München (DE)
(74) Representative: Körber, Martin, Dipl.-Phys.

(57) **Abstract**

The present invention relates to a mobile terminal (200, 300) for a wireless cellular telecommunication system and to a method for controlling such a mobile terminal. The mobile terminal (200, 300) according to the present invention comprises receiving means (203, 311) for receiving mode change information transmitted for protecting a predetermined area from disturbing use of said portable terminal, control means (204, 321) for detecting received mode change information and changing an operation mode of the mobile terminal depending on the received mode change information into a protection mode so that said predetermined area is protected from disturbing usage of the mobile terminal, providing means (214, 330) for providing an indicating signal for indicating to a user that the mobile terminal is in said protection mode, and indicating means (212, 323) for outputting said indication signal. The indication signal may be an audible or a visible signal which informs a user that his mobile terminal is currently in said protection mode.

## Description

The present invention relates to a mobile terminal for a wireless cellular telecommunication system, which has a protection mode for protecting a predetermined area from disturbing usage of the mobile terminal and a method for controlling such a mobile terminal.

In many areas the use of mobile terminals of wireless telecommunication systems is regarded as a nuisance for other people, like in restaurants or in the open, or is even dangerous in places like hospitals, airplanes or nuclear power plants. In places like restaurants or in the opera, audible signals output from mobile terminals are disturbing other people or the spectacle being given. In the second case, the use of the mobile terminals, particularly the transmission of high frequency electromagnetic waves can disturb other electronic devices or the like by interfering with their circuitry possibly leading to severe incidents. It is therefore important to provide a way to protect predetermined areas from a disturbing usage of mobile terminals within these areas. Particularly, the protection of such predetermined areas should not depend on the user's will, e. g. on a user's input of information to the mobile terminal, but the mobile terminals should be put in a protection mode automatically.

EP 0 891 110 A1 discloses a method and a system for preventing a mobile terminal from causing disturbance within a predetermined area, e. g. inside a plane or inside of hospitals. Particularly, the disclosed method comprises the steps of transmitting a deactivation or protection signal from a base station to a mobile terminal and deactivating a use of the output of the mobile terminal in response to the deactivation signal. Thereby, the transmission output is deactivated. The base station can either be an ordinary base station or a base station specifically designed for mainly transmitting the deactivation signal. Upon approaching or entering a predetermined area to be protected, the mobile terminal receives a deactivation signal from the corresponding base station of the predetermined area and is automatically deactivated, i. e. is switched into a mode in which the use of the transmission output is deactivated. Thereby, the mobile terminal can output a warning signal which indicates a user that the mobile terminal will be deactivated soon.

The system disclosed in EP 0 8901 110 A1 has the disadvantage that, since a mobile terminal having received a deactivation signal is switched off automatically, a user does not have any indication why the mobile terminal has automatically changed its mode. Even if the warning signal indicating that the mobile terminal will be deactivated soon after reception of a deactivation signal is output, the user might not hear the signal and thus has no information what happened to his mobile terminal.

The object of the present invention is to provide a mobile terminal for a wireless cellular telecommunication system, which has a protection mode in which the mobile terminal is put after receiving a protection signal from a base station of a predetermined area to be protected from disturbing usage of the mobile terminal, and which informs the user that the mobile terminal has been switched into the protection mode.

The object of the present invention is further to provide a method for controlling such a mobile terminal.

The above object is achieved by a mobile terminal for a wireless cellular telecommunication system, with receiving means for receiving mode change information transmitted for protecting a predetermined area from disturbing use of said portable terminal, control means for detecting received mode change information and changing an operation mode of the mobile terminal depending on a received mode change information into a protection mode so that said predetermined area is protected from disturbing usage of said mobile terminal, and providing means for providing an indicating signal for indicating to a user that the mobile terminal is in said protection mode, and indicating means for outputting said indicating signal.

The above object is further achieved by a method for controlling a mobile terminal for a wireless cellular telecommunication system in a predetermined area to be protected from disturbing usage of said mobile terminal, with the steps of transmitting mode change information for protecting said predetermined area from disturbing use of said mobile terminal, receiving and detecting mode change information on said portable terminal and changing an operation mode thereof depending on the received mode change information into a protection mode so that said predetermined area is protected, providing an indicating signal for indicating to a user that the mobile terminal is in said protection mode, and outputting said indicating signal.

Since the mobile terminal according to the present invention provides and outputs an indicating signal during said protection mode, the user is informed on the operation mode of his mobile terminal during the protection mode. This is particularly important since the mobile terminal is automatically switched into the protection mode upon receiving mode change information so that the user might be surprised and might not know what is going on with his mobile terminal.

The receiving means of the mobile terminal according to the present invention can be adapted for receiving said mode change information on the basis of the wireless telecommunication system. This means that the mobile terminal receives the mode change information on the basis of the same telecommunication system, in which it normally operates to transmit and receive user and control data to or from a normal base station of the telecommunication system.

Alternatively, the receiving means of the mobile terminal according to the present invention can be adapted for receiving the mode change information on the basis of a wireless protection system different from the wireless telecommunication system. In this case, the mobile terminal according to the present invention comprises separate means for receiving and processing the mode change information, whereby the mode change information is transmitted from a base station operating in said wireless protection system different from the wireless telecommunication system. Separating the function of receiving and processing the protection signals from performing functions of the wireless telecommunication system allows to completely disable function blocks for the wireless telecommunication system in the protection mode, thereby eliminating any associated power consumption and undesirable or dangerous interference to other services or devices in the area to be protected.

Advantageously, the indicating means continuously outputs the indicating signal during said protection mode. Alternatively, the indicating means can regularly output said indicating signal during said protection mode, e. g. in predetermined equidistant time intervals. Further alternatively, the indicating means outputs the indicating signal only once after the mobile terminal has been switched into the protection mode.

Advantageously, the indicating signal is an acoustic signal and the indicating means is a loudspeaker. Alternatively, the indicating signal can be a visual signal and the indicating means is a display. Further, an acoustic signal and a visual signal can be provided and output as indicating signals at the same time or alternating to ensure that the user is informed on the protection mode of the mobile terminal.

The present invention is explained in more detail in the following description by means of preferred embodiments thereof relating to the enclosed drawings, in which
figure 1 shows a typical application scenario of the present invention,
figure 2 shows another application scenario of the present invention,
figure 3 shows a first type of a mobile terminal according to the present invention, and
figure 4 shows a second type of a mobile terminal according to the present invention.

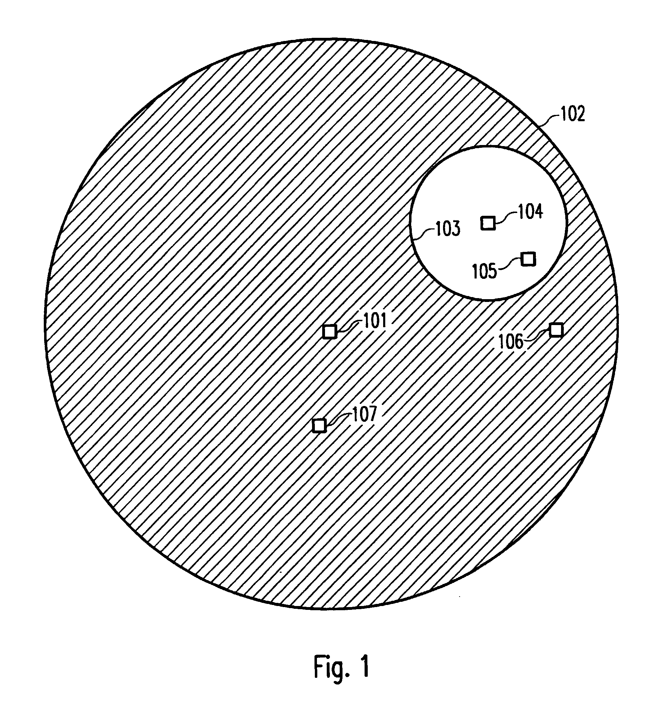

Figure 1 shows a base station 101 of a normal wireless cellular telecommunication system having a transmitting and receiving range indicated by the circle 102. The circle 102 thus indicates the cell size which is served by the base station 101. The base station 101 transmits and receives signals to and from mobile terminals 106, 107 within the range limited by the circle 102. The mobile terminals 106 and 107 located within the range 102 are able to communicate with the base station 101 on the basis of the wireless telecommunication system, e. g. the GSM-system or any other wireless cellular telecommunication system.

Within the range of the base station 101 a protection area is located, the range of which is indicated by the circle 103. This protection area 103 is e. g. the area of a hospital, a nuclear power plant, a restaurant or the like. The protection area is protected from disturbing use of mobile terminals within its range by means of a protection signal transmitter 104, which transmits mode change information to mobile terminals within a predetermined area as e. g. the protection area of the range 103 shown in figure 1. Mobile terminals within the predetermined area receive the mode change signals from the protection signal transmitter 104 and change their modes accordingly into a protection mode so that the predetermined area is protected from disturbing use of the mobile terminals. The mobile terminal 105 located within the range 103 of the protection signal transmitter 104 is a mobile terminal according to the present invention and is therefore able to receive the protection signals from the protection signal transmitter 104. Upon detecting such a protection signal from the protection signal transmitter 104, the mobile terminal 105 switches into a protection mode so that the protection area 103 is protected from disturbing usage of the mobile terminal 105. Thereby, the mode change information transmitted from the protection signal transmitter 104 and the protection mode of the mobile terminal 105 depend on the area to be protected. In case of restaurants, operas or the like, in which audible signals output from mobile terminals are disturbing other people or the show, the predetermined area has to be protected from disturbing usage of the mobile terminals by lowering or suppressing audible signals from the mobile terminals. In other cases like hospitals, nuclear power plants or the like, in which the electromagnetic signals output from the mobile terminals can severely disturb other electronic devices within the predetermined area, at least the high frequency part of the mobile terminals has to be switched off to protect the predetermined area from disturbing usage of the mobile terminals.

A mobile terminal entering the range 103 of the predetermined area from the outside, e. g. assuming that the mobile terminal 106 shown in figure 1 approaches the circle 103, it receives mode change information transmitted from the protection signal transmitter 104. After reception of the mode change signals, the mobile terminal is then switched into the protection mode after a predetermined time, which can be preset or which can be determined by the processing time necessary to switch the mobile terminal into the protection mode. Thereby, the mobile terminal is automatically switched into the protection mode. According to the present invention, the mobile terminal 105 being in the protection mode provides and outputs an indicating signal for indicating a user that the mobile terminal is in the protection mode. Even though the mobile terminal 105 has been automatically switched into said protection mode upon receiving the mode change information from the base station 104, the user therefore gets the information that the mobile terminal 105 is in the protection mode.

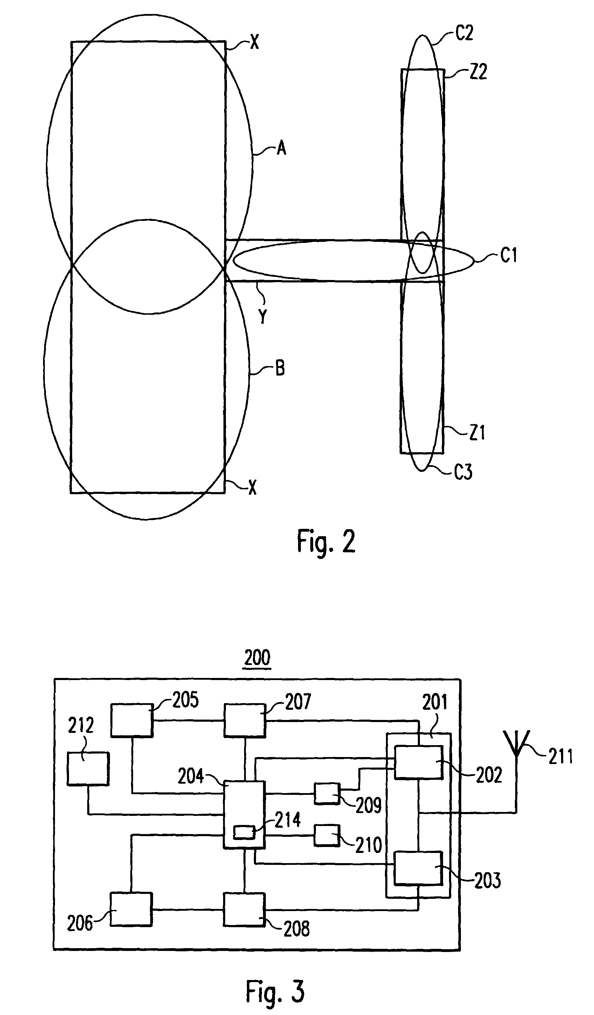

In figure 2, another application scenario of the present invention is shown. Figure 2 shows e. g. the topography of an airport terminal, whereby the areas A and B are the coverage areas of a base station of a normal cellular wireless telecommunication system covering the entire waiting lounge X. Areas C1, C2 and C3 indicate the coverage areas of a protection signal transmitter transmitting mode change signals to protect the areas C1, C2 and C3 from disturbing usage of mobile terminals. In the case shown in figure 2, the areas C1, C2 and C3 cover e. g. the gangways Y, Z1 and Z2, respectively towards an airplane. As long as the user is making phone calls while being in the waiting lounge X, he is within the cell site of a normal base station and his phone will work normally. Once he is approaching the area C1, the mobile terminal receives mode change information from the protection signal transmitter. The mobile terminal according to the present invention will then automatically switch into the protection mode and, being in the protection mode, will provide and output an indicating signal indicating the protection mode to a user. If, e. g. the user who has been using his mobile terminal in the waiting lounge X and has e. g. terminated a conversation before he entered the gangway Y, tries to make another phone call while being in the gangway Y will not be able to do so since his mobile terminal is in the protection mode. In case of an airplane, the protection mode of the mobile terminal is a mode in which at least a high frequency portion of the mobile terminal will be switched off. In this case, the user might wonder why he is not able to place phone calls any more and might try to change the mode of his mobile terminal. Since the mobile terminal according to the present invention, however, provides an output and indicating signal indicating the protection mode to the user, confusion of the user is avoided.

It is to be noted, that the protection signal transmitters for the scenarios as shown in figure 1 and figure 2, as e. g. the protection signal transmitter 104, are either transmitting the mode change information on the basis of the same wireless telecommunication system, in which the respective mobile terminals normally operate, or on the basis of a wireless protection system different from the normal wireless telecommunication system.

In figure 3, a first type of a mobile terminal according to the present invention is shown. The mobile terminal 200 of figure 3 is adapted to receive mode change information on the basis of the normal wireless cellular telecommunication system, on the basis of which it normally communicates with a respective normal base station of the telecommunication system.

The mobile terminal 200 comprises transmitting and receiving means 201 for transmitting information to and receiving information from normal base stations of the telecommunication system. The transmitting and receiving means 201 is further adapted to receive mode change information transmitted from a protection signal transmitter on the basis of the same wireless telecommunication system. In this case, the protection signal transmitter may either be an apparatus simply transmitting the mode change information without having other functionalities, or a normal base station of the wireless cellular telecommunication system additionally transmitting the mode change information. The transmitting and receiving means 201 of the mobile terminal 200 further comprises a transmitting unit 202 and a receiving unit 203. The receiving unit 203 of the transmitting and receiving means 201 receives signal by means of an antenna 211. The received signals are then processed in the mobile terminal 200 under control of a control means 204. Thereby, the received signals are e. g. decoded in a decoding means 208, whereby further processing steps depending on the structure of the signals might be conducted. At the end of the processing, the signals are transformed into audible signals to be output from a loudspeaker 206 in case they are voice signals, or answered by the mobile terminal 200 in case they are signalling information, or passed on to the data part or a data device in case they are data signals, or output on a display in case they are graphic information or written information.

The mobile terminal 200 further comprises a microphone 205 for receiving and detecting acoustic signals, e. g. speech signals from a user. The acoustic signals detected from the microphone 205 are processed under the control of the control means 204, e. g. are coded in a coding means 207 and so on depending on the structure of the signals and then transmitted by the transmitting unit 202 through the antenna 211. The mobile terminal 200 comprises further elements for processing received signals and signals to be transmitted besides the decoding means and the coding means, whereby the additional elements depend on the structure of the signals in the wireless telecommunication system, so that a large variety of further processing units can be implemented depending on the application.

The mobile terminal 200 further comprises a generating means 209 connected between the control means 11 and the transmitting unit 201, e. g. for generating signalling information, and a timing means 210 connected with the control means 204 for providing time information to the control means. Further, the control means 204 of the mobile terminal 200 comprises a providing means 214 for providing an indicating signal for indicating to a user that the mobile terminal is in said protection mode. After the control means 204 has detected mode change information received by the receiving unit 203, it switches the mobile terminal 200 into said protection mode. Then, the providing means 214 provides said indicating signal, e. g. by generating said indicating signal or reading said indicating signal from a storage means, and provides indicating information to an indicating means 212 which indicates or outputs said indicating signal. The indicating means 212 can be a loudspeaker for outputting audible indicating signals, a display for outputting visible indicating signals, a vibration means for outputting vibrating indicating signals or the like. In case of audible or visible indicating signals, the indicating means 212 can be part of or be identical to the normal loudspeaker and display, respectively, of the mobile terminal 200. The indicating means 212 can continuously output said indicating signal. If the indicating means is e. g. a display, the display can continuously show a message that the mobile terminal 200 is in the protection mode. Alternatively, the indicating means 212 may regularly output the indicating signal in predetermined intervals. If, e. g. the indicating means is a loudspeaker, the loudspeaker may regularly output an audible signal indicating the protection mode. The audible signal may e. g. be a beep tone or a spoken message "protection mode" or the like. Further alternatively, the indicating means 212 may output said indicating signal only once. Further, the providing means 214 may provide the indicating information to a display and a loudspeaker at the same time, so that indicating signals are output as visual and as audible signals simultaneously.

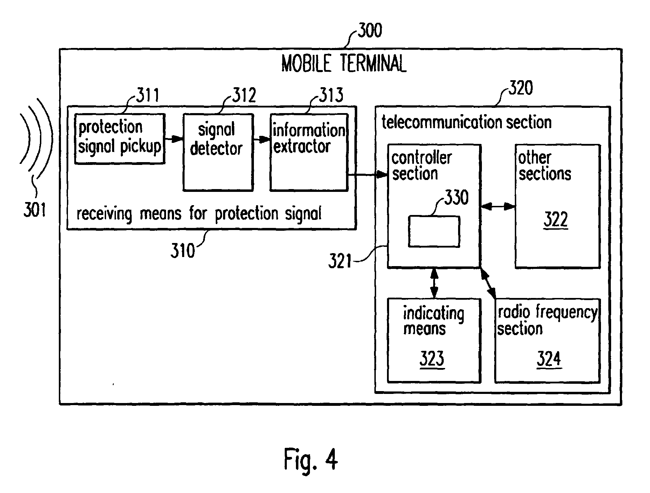

In figure 4, a second type of a mobile terminal according to the present invention is shown, in which the mode change information is information transmitted on the basis of a wireless protection system different from the wireless cellular telecommunication system in which a mobile terminal usually operates. In this case, the protection signal transmitter, as e. g. the protection signal transmitter 104 shown in figure 1, operates to transmit the mode change information only on the basis of the wireless protection system. The mobile terminal 300 shown in figure 4 comprises a receiving section 310 for receiving mode change signals, as e. g. transmitted from a protection signal transmitter 104 shown in figure 1, and changing the mode of the mobile terminal 300 into a protection mode. Further, the mobile terminal 300 comprises a telecommunication section 320 for communicating with normal base stations of the wireless cellular telecommunication system being different from the wireless protection system.

The receiving means 310 of the mobile terminal 300 comprises a pick-up means 311 for picking up mode change signals 301, and supplies the picked up mode change signal to a detecting means 312 for detecting and demodulating the picked up mode change signals. The demodulated mode change signals are then supplied to an information extracting means 313, which recognizes relevant mode change signals for the mobile terminal 300, and supplies the extracted mode change information to a controlling section 321 of the telecommunication section 320. The controlling section 321, upon receiving and detecting the mode change information, controls the changement of the mode of the mobile terminal 300 into the protection mode. The controlling section 321 thereby comprises a providing means for providing an indicating signal for indicating to a user that the mobile terminal 300 has been switched into said protection mode. This means that after switching the mobile terminal 300 automatically into the protection mode, the providing means 330 provides said indicating signal, e. g. by reading a prestored indicating information from a storage means or by generating said indicating information, and provides an indicating signal to an indicating means 323 for outputting said indicating signal. Said indicating means 323 can be a display for displaying a visual indicating signal, a loudspeaker for outputting an audible indicating signal, a vibrating means for outputting a vibrating indicating signal or the like. Thereby, said indicating means 323 may continuously output said indicating signal or regularly output said indicating signal in predetermined time intervals. Alternatively, the indicating means 323 may output the indicating signal only once.

In case that the indicating signal is an audible signal, the indicating means 323 may be identical to or a part of the usual loudspeaker of the mobile terminal 300. The audible indicating signal may e. g. be a beep tone or a prerecorded speech message that the mobile terminal 300 is in said protection mode. In case that the indicating signal is a visual signal, the indicating means 323 may be part of or identical to the normal display of a mobile terminal 300. The visual indicating signal can e. g. be a written message, that the mobile terminal 300 is in said protection mode. Alternatively, the indicating means 323 may be a separate means for outputting visual indicating signals, e. g. a light diode or the like. A further possibility is that the controlling section 321 controls the provision and the output of an indicating signal so that a visual and an audible indicating signal are output simultaneously to assure that the user notices that his mobile terminal is in said protection mode.

Further, the mobile terminal 300 comprises a radio frequency section 324 for transmitting and receiving radio frequency signals in the wireless cellular telecommunication system. Further, other sections 322 for operating the mobile terminal 300 in the wireless telecommunication system, i. e. for communicating data with normal base stations of the telecommunication system within non-protected areas are provided.

The mobile terminal 200 of figure 3 as well as the mobile terminal 300 of figure 4 can have different levels of the protection mode. The protection mode can e. g. be a silent mode, in which only audible signals output from the mobile terminals 200 and 300 are lowered or suppressed. Further, the protection mode can be a mode in which only a radio frequency section is switched off to avoid transmission and reception of radio frequency signals in the wireless telecommunication system, whereby other base band functions remain in an operation mode. Further, the protection mode can be a mode in which the entire mobile terminal is switched off. The protection mode into which the mobile terminals 200 and 300 are switched depends therefore on the area to be protected, in places like restaurants, operas, theaters or the like, the silent protection mode is sufficient. In other areas, like nuclear power plants and airplanes, at least the radio frequency section has to be switched off in the protection mode.

## Claims

1. Mobile terminal (200, 300) for a wireless cellular telecommunication system, with receiving means (203, 311) for receiving mode change information transmit for
protecting a predetermined area from disturbing use of said portable terminal,
control means (204, 321) for detecting received mode change information and changing an operation mode of the mobile terminal depending on the received mode change information into a protection mode so that said predetermined area is protected from disturbing usage of said mobile terminal,
providing means (214, 330) for providing an indicating signal for indicating to a user that the mobile terminal is in said protection mode, and
indicating means (212, 323) for outputting said indicating signal.

2. Mobile terminal according to claim 1,
**characterized in,**
that said receiving means (203) is adapted for receiving said mode change information on the basis of said wireless telecommunication system.

3. Mobile terminal according to claim 1,
**characterized in,**
that said receiving means (311) is adapted for receiving said mode change information on the basis of a wireless protection system different from said wireless telecommunication system.

4. Mobile terminal according to claim 1, 2 or 3,
**characterized in,**
that said indicating means (212, 323) continuously outputs said indicating signal.

5. Mobile terminal according to claim 1, 2 or 3
**characterized in,**
that said indicating means (212, 323) regularly outputs said indicating signal.

6. Mobile terminal according to claim 1, 2 or 3
**characterized in,**
that said indicating means (212, 323) outputs said indicating signal once.

7. Mobile terminal according to one of the claims 1 to 6,
**characterized in,**
that said indicating signal (212, 323) is an acoustic signal and said indicating means is a loudspeaker.

8. Mobile terminal according to one of the claims 1 to 6,
**characterized in,**
that said indicating signal is an visual signal and said indicating means is a display.

9. Method for controlling a mobile terminal for a wireless cellular telecommunication system in a predetermined area to be protected from disturbing usage of said mobile terminal, with the steps of
transmitting mode change information for protecting said predetermined area from disturbing use of said portable terminal,
receiving and detecting mode change information in said portable terminal and changing an operation mode thereof depending on the received mode change information into a protection mode so that said predetermined area is protected,
providing an indicating signal for indicating to a user that the mobile terminal is in said protection mode, and
outputting said indicating signal.

10. Method for controlling a mobile terminal according to claim 9,
**characterized in,**
that said mode change information is transmitted on the basis of said wireless telecommunication system.

11. Method for controlling a mobile terminal according to claim 9,
**characterized in,**
that said mode change information is transmitted on the basis of a wireless protection system different from said wireless telecommunication system.

12. Method for controlling a mobile terminal according to claim 9, 10 or 11,
**characterized in,**
that said indicating signal is continuously output.

13. Method for controlling a mobile terminal according to claim 9, 10 or 11,
**characterized in,** that said indicating signal is regularly output.

14. Method for controlling a mobile terminal according to claim 9, 10 or 11,
**characterized in,**
that said indicating signal is output once.

15. Method for controlling a mobile terminal according to one of the claims 9 to 15,
**characterized in,**
that said indicating signal is an acoustic signal.

16. Method for controlling a mobile terminal according to one of the claims 9 to 15,
**characterized in,**
that said indicating signal is an visual signal.
